(19) Europäisches Patentamt
European Patent Office
Office européen des brevets

(11) **EP 0 518 247 B1**

(12) **EUROPEAN PATENT SPECIFICATION**

(45) Date of publication and mention
of the grant of the patent:
**10.12.1997 Bulletin 1997/50**

(51) Int Cl.6: **H02J 13/00**, H02H 11/00

(21) Application number: **92109627.7**

(22) Date of filing: **09.06.1992**

(54) **Method and device for preventing unauthorized operation of high-voltage apparatuses**

Verfahren und Vorrichtung zum Verhindern des unautorisierten Betriebes von Hochspannungsgeräten

Procédé et dispositif pour prévenir l'opération non autorisée d'appareils à haute tension

(84) Designated Contracting States:
**AT DE FR GB IT NL**

(30) Priority: **10.06.1991 SE 9101757**

(43) Date of publication of application:
**16.12.1992 Bulletin 1992/51**

(73) Proprietor: **ASEA BROWN BOVERI AB**
**721 83 Västeras (SE)**

(72) Inventors:
- **Malmqvist, Lars-Gunnar**
  **S-730 50 Skultuna (SE)**
- **Olofsson, Staffan**
  **S-723 38 Västeras (SE)**

(74) Representative: **Boecker, Joachim, Dr.-Ing.**
**Adelonstrasse 58**
**65929 Frankfurt am Main (DE)**

(56) References cited:
**EP-A- 0 166 206**        **EP-A- 0 224 711**
**DE-A- 1 292 716**        **DE-A- 2 607 622**
**DE-A- 2 753 659**        **FR-A- 1 291 487**

- **PROCEEDINGS I.E.E., vol. 110, no. 1, January 1963, pages 185 - 196; CORY: 'An approach by means of mathematical logic to the switching of power-system networks'**

## Description

The invention relates to a method for preventing unauthorized operation of high-voltage apparatuses according to the precharacterising part of claim 1. The invention also relates to a device for carrying out the method (c.f. EP-A-0224711).

Switchgears intended for transformation and distribution of electric power comprise, inter alia, high-voltage apparatuses (HV-apparatuses), such as circuit breakers, disconnectors and grounding switches.

A so-called unauthorized operation may be caused by a single fault on the outputs of the computer which controls the HV-apparatus. By single fault is meant a single fault in, for example, printed circuit boards, cables, relays, etc.

The operation of HV-apparatuses via computers is normally carried out in such a way that an operator at a terminal orders closing or opening of the HV-apparatus in question. The status of the HV-apparatus is available on a visual display unit (VDU), which allows the operator in a faultless state to have a full view of the relevant statuses.

During operation of HV-apparatuses from computers,-the control takes place via digital outputs from the computer. Unauthorized activation of such an output because of a fault in the computer also causes an operation of an HV-apparatus. This may lead to service interruption, switchgear damage, and personal injury.

The HV-apparatuses currently used are provided with operating devices which are activated via the digital pulse from the computer. When the operation has started, the operating device becomes self-held until the HV-apparatus has reached its final position, which may be either "on" or "off". In this way, the duration of the digital control pulse need not be maintained longer than the time it takes for the operating device to become self-held.

Within the electric power field there are HV-apparatuses which impose high demands with respect to unauthorized operation.

Unauthorized operation of circuit breakers may entail costly power drop-outs and hence service interruptions for, for example, process industries of various kinds.

Unauthorized operation of disconnectors and grounding switches may occur when these are current-carrying or when they become current-carrying because of the operation. Many of the HV-apparatuses are dimensioned for operation in non-current state only. A faulty operation may therefore lead to damage of the HV-apparatus.

In addition, a disconnector or a grounding switch which is damaged in the event of an unauthorized operation may cause arcs with large energy contents, which may entail a great risk of personal injury.

The invention aims at providing a method for preventing unauthorized operation of high-voltage apparatus of the above-mentioned kind which functions in a reliable manner with respect to input faults .

To achieve this aim the invention suggests a method and device for preventing unauthorized operation of high-voltage apparatuses according to the introductory part of claim 1, which is characterized by the features of the characterizing part of claim 1.

A further development of the method is characterized by the features of the additional claim 2.

A device for carrying out the method is characterized by the features of the claim 3.

A further development of said device is characterized by the features of the additional claim 4.

The invention comprises introducing a method which provides security against unauthorized operation in connection with operation of HV-apparatuses by means of a computer. The method comprises a selection method, a supervision method and an execution method. The selection method and the execution method utilize external relays of so-called safety type. This means relays which have the property that, if a contact is welded together, the other contacts of the relay, independently of whether the relay is switched on or off, will be fixed in the position they have when the contact is welded together.

The relays also have the task of constituting a disturbance barrier between the computer and the HV-apparatuses.

The device for carrying out the method comprises a supervision unit, which may suitably be implemented in the computer, and an external relay unit.

According to the invention, a so-called selection relay SR is allocated to each HV-apparatus.

When an HV-apparatus is to be operated, that is, either during switch on or switch off, a selection of the relevant HV-apparatus is first made by the operator at the data terminal (keyboard) marking the HV-apparatus in question. This activates the selection relay SR of the HV-apparatus. Since only one HV-apparatus at a time is allowed to be operated, the other HV-apparatus are blocked via a blocking relay BR which is common to all HV-apparatus.

To secure a correct operation, a check-up of the control signals delivered by the computer is always performed, also in a faultless state. The control signals are coordinated in the relay unit into two feedback signals which are connected to two feedback inputs on the supervision unit. Before an operation is ordered, and in a faultless state, these inputs receive complementary feedback signals via the relays SR and BR, for example expressed in binary terms such as "1" and "O". When the selection relay SR for some HV-apparatus is activated, the feedback signals change to "O" and "1" via contacts of the relays SR and BR. By means of a logic system built into the supervision unit, when a simultaneous order for selection and execution of an operation of an HV-apparatus is given, an operating pulse is supplied to the operating means of the HV-apparatus via an execution relays ER.

A number of different single faults may occur. If, for example, the computer incorrectly gives a signal for selection of an HV-apparatus, a change of the complementary feedback signals takes place, as in the case of an operating command via the relays SR and BR. With the aid of the internal logic, it is then determined that this is a fault since no command has been given. The computer signals the existence of the fault, and further steps in the operation are blocked in the software.

The invention also comprises checking that the selection process and the execution process take place in the right sequence and that two or more selections cannot be made simultaneously.

A more detailed description of the faults which may be eliminated with the help of the invention will be given later.

By way of example, the invention will now be described in greater detail with reference to the accompanying drawings showing in

Figure 1   a general diagram of the different units which are needed for the operation of HV-apparatuses and for preventing unauthorized operation,

Figure 2   a detailed diagram of the relay unit RU in Figure 1,

Figure 3   an embodiment of the supervision unit included in the invention.

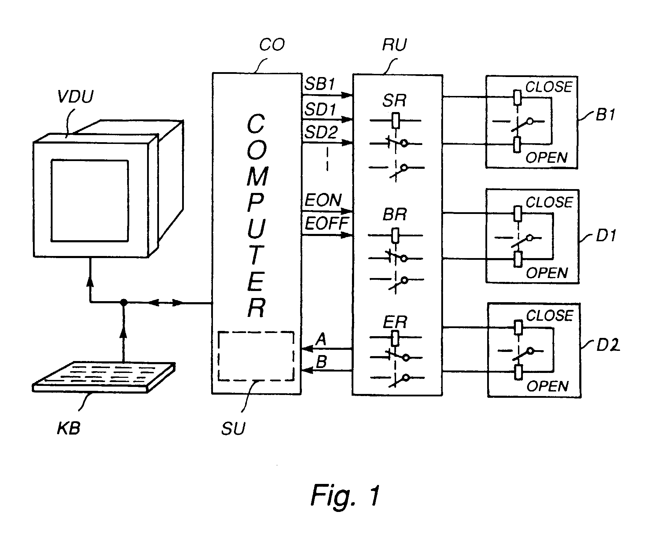

The designations used in Figure 1 have the following significance:
KB = keyboard; VDU = visual display unit; CO = computer; SU = supervision unit; RU = relay unit; B1 = circuit breaker 1; D1 = disconnector 1; D2 = disconnector 2 etc.; SB1 = signal for selection of circuit B1; SD1 = signal for selection of D1; SD2 = signal for selection of D2 etc.; EON = execute ON; EOFF = execute OFF; A and B are feedback signals; SR = selection relay; BR = blocking relay,; and ER = execution relay.

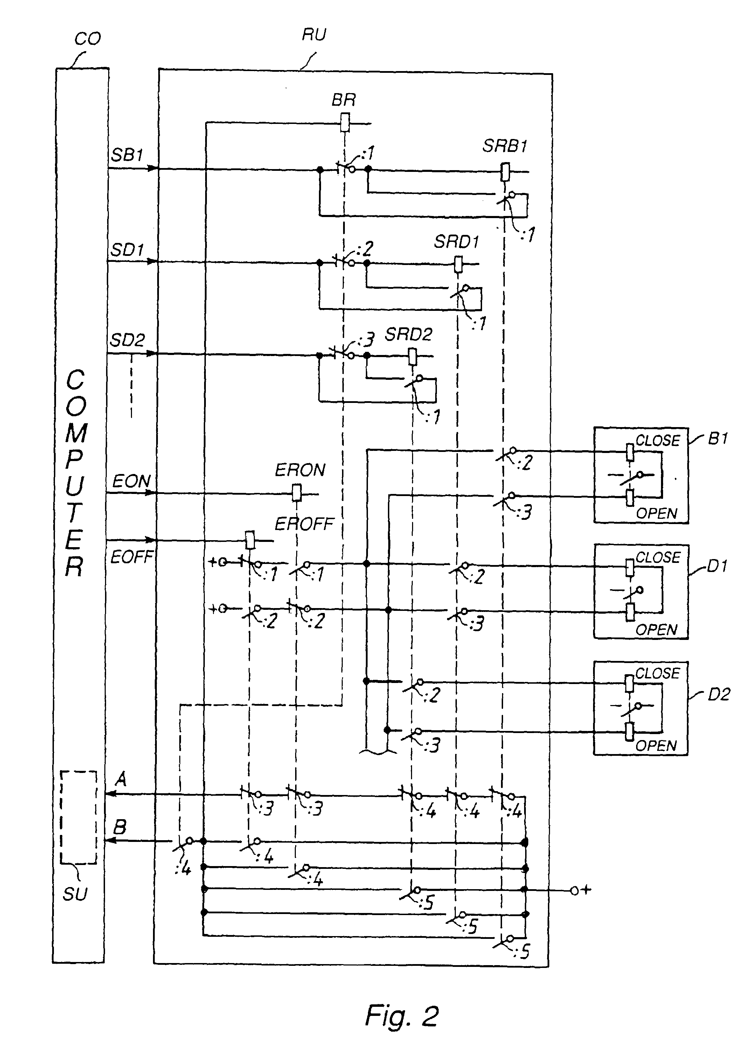

In addition to the designations in Figure 1, the following designations are included in Figure 2:
SRB1 = selection relay for circuit breaker B1 with make and break contacts SRB1:1, SRB1:2 etc.; SRD1 = selection relay for disconnector D1 with make and break contacts SRD1:1, SRD1:2 etc.; SRD2 = selection relay for disconnector D2 with make and break contacts SRD2:1, SRD2:2 etc.; ERON = execution relay for switching ON circuit breaker or disconnector with make and break contacts ERON:1, ERON:2 etc.; and EROFF = execution relay for switching OFF circuit breaker or disconnector with make and break contacts EROFF:1, EROFF:2 etc.

The operation of an HV-apparatus with a computer according to the invention is shown in Figure 1. The operator can read the status of the HV-apparatus on the VDU. When an HV-apparatus is to be operated, this is requested via the keyboard KB by first pressing the selection key for the HV-apparatus in question. This initiates a signal from the computer CO, for example SB1 to the relay unit RU to prepare for execution order with the aid of a selection relay SR. With the aid of a blocking relay BR, a blocking is performed such that no other HV-apparatus can be prepared for operation until the ordered operation has been executed. By also pressing, while the selection relay is activated, the key on the keyboards for, for example, ON, a signal EON for execution is delivered from the computer, via the relay unit, for execution of the ordered ON-operation of the circuit breaker B1 with the aid of an execution relay ER.

Before the execution operation is executed, however, it is checked that this can be done. This check is based on feedback to the computer of the signals A and B which indicate the status of the relays in the relay unit. By means of logical processing of these feedback signals in a supervision unit SU, which is preferably implemented in the computer, and with information to the effect that selection has been made, information is obtained on the VDU and/or in some other way that the computer is incorrectly giving a command signal, or that a fault has occurred on the relay unit. How this check is performed will be described with reference to Figure 2.

Both Figures 1 and 2 show an embodiment for operation of three HV-apparatuses. In principle, the method according to the invention may cover a very large number of HV-apparatuses provided that the relay unit is provided with one selection relay for each HV-apparatus.

The method to prevent unauthorized operation will now be described in more detail with reference to Figure 2, which shows a state where all the HV-apparatuses are in the OFF-position and where no selection has been made and no execution order has been requested. Further, it is assumed that no unauthorized operation signal is present on the outputs of the computer and that the relay unit is intact. This means that input A to the supervision unit is under voltage whereas input B is under no voltage. In the following, an input under voltage will be marked by "1" and an input under no voltage will be marked by "O". Otherwise, it is clear from Figure 2 that

A = 1     if none of the relays SR or ER is activated
A = O     if any of the relays SR or ER is activated
B = 1     if any of the relays SR or ER is activated and, at the same time, the relay BR is activated
B = O     if none of the relays SR, ER or BR is activated or if any of the relays SR or ER is activated but not the relay BR.

When an operation is to be executed, as mentioned above, a selection of the relevant HV-apparatus is first made. Now, if, for example, circuit breaker B1 is to be operated, the relay unit will thus receive the signal SB1 via the keyboard and the computer. This causes the relay SRB1 to become self-held via contact SRB1:1. At the same time, also contacts SRB1:2 and :3 are closed, which means that B1 can be operated as soon as the execution order arrives. Further, contact SRB1:4 will be opened and :5 be closed, which in turn results in the input A of the supervision unit being set to "O" and the blocking relay BR becoming energized. The latter prevents selection of another HV-apparatus. Since contact BR:4 is now closed, the input B of the supervision unit is set to "1 via contact SRB1:4.

A logical check-up is now performed in the supervision unit to see whether a selection has been made and if A and B have changed from "1" and "O" to "O" and "1". If this is the case, and while the selection relay for B1 is activated, the signal EON will be transmitted from the computer to the relay unit when the key for execute ON is pressed down on the keyboard KB. This causes the relay ERON to become energized and the circuit breaker B1 to be operated to the ON-position. Since the operating member of the circuit breaker has holding circuits, both signals SB1 and EON may now cease.

Disconnection of the circuit breaker is performed in the same way by selection, logical check-up and execution. Operation of the other HV-apparatuses takes place in a corresponding way.

The task of the invention is to prevent unauthorized operation, for example if the computer delivers a selection signal or execution signal without this being ordered. This type of fault will henceforth be referred to as an output fault and will be designated "O". Another type of fault may be derived from the relay unit, for example if both "A" and "B" simultaneously show "O" and "1". This type of fault will henceforth be referred to as an input fault (to the supervision unit) and be designated "I".

If the computer incorrectly delivers a selection signal SB1, and if the relay unit is otherwise faultless, the relay sequences described below will be executed, that is, inter alia, that "A" and "B" change from "1" and "O" to "O" and "1". However, the logical judgment in the supervision unit now determines that no command has been given and therefore the computer will provide information that there is an output fault.

If a fault arises on the selection outputs of the computer or on any of the relays in the relay unit, such as when there is no operation although a command has been given, the inputs A and B will not change from "1" and "O" to "O" and "1". When the contacts are welded together, A and B will not return, after an operation, from "O" and "1" to "1" and "O". The computer shall then indicate an output fault.

To describe the decision logic of the supervision unit, the following designations will be used in addition to the feedback signals A and B previously defined:

SE =    1 if selection requested; SE = O if selection not requested
A =    1 if relay unit not activated; A = O if relay unit activated
B =    O if relay unit not activated; B = 1 if relay unit acti vated
I =    input fault, i.e. faulty feedback signals
O =    output fault, i.e. unauthorized activation or non-acti vation of relay unit
C =    computer and relay unit functioning correctly.

To be able to describe the decision logic according to the invention, expressed in Boolean algebra with letter designations, an inverted A will be indicated by $\overline{A}$, an inverted B will be indicated by $\overline{B}$, and an inverted SE will be indicated by $\overline{SE}$. The decision logic will then be as follows:

$$I = (A \cdot B) + (\overline{A} \cdot \overline{B})$$

$$O = (\overline{SE} \cdot \overline{A} \cdot - B) + (SE \cdot A \cdot \overline{B})$$

$$C = (SE \cdot \overline{A} \cdot B) + (\overline{SE} \cdot A \cdot \overline{B})$$

The logical relationship can also be expressed with the aid of the following table:

| | SE | O | 1 |
|---|---|---|---|
| A | B | | |
| O | 1 | O | C |
| 1 | O | C | O |
| O | O | I | I |
| 1 | 1 | I | I |

This means that in the case of the following fault situations, the logic system prevents operation of an HV-apparatus since

- unauthorized activation or non-activation of selection relays SR is discovered during feedback

- unauthorized activation of execution relays ER is discovered during feedback

- a fault on one of the complementary inputs A or B for feedback is discovered either directly or upon activation of a selection relay

- upon deactivation of a relay, welding of operation contacts is discovered during feedback because of the use of safety relays.

During the following faults, a blocking relay BR prevents operation since

- activation of an execution relay ER prior to a selection relay SR entails blocking of the selection relays

- activation of a selection relay entails blocking of the other selection relays, i.e. simultaneous activation of several selection relays cannot be performed.

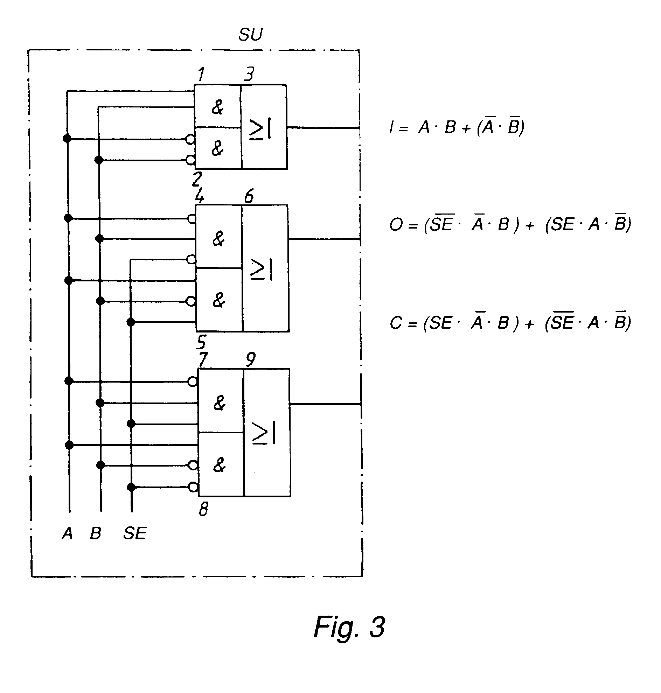

The implemented supervision unit can be designed in a number of different ways. Figure 3 shows one embodiment with conventional logic elements. According to what has already been described, the supervision unit is to be supplied, in addition to the binary signals A and B, also with binary information as to whether a selection SE has been made or not.

Since a determination as to whether or not an input fault has occurred is independent of whether or not a selection of an HV-apparatus has been made, it is sufficient for the Boolean equation for "I" an "AND"-element 1, an "AND"-element 2 with inverting inputs, and an "OR"-element 3 with two inputs.

For a logical decision whether there is an output fault "O" from the computer, it is required that all three parameters A, B and SE are available. As will be clear from Figure 3, the Boolean equation for "O" may be executed with the aid of two "AND"-elements 4 and 5 with three inputs and an "OR"-element 6 with two inputs.

In certain cases it may be of value to receive confirmation that the outputs of the computer are faultless. The Boolean equation for "C", as will be clear from Figure 3, may be executed with the same logic elements as during execution of "O", i.e. with two "AND"-elements 7 and 8 and one "OR"-element 9.

**Claims**

1. Method for preventing unauthorized operation of high-voltage apparatuses (HV-apparatuses) (B1, D1, D2) which are operated by means of a keyboard (KB), a visual display unit (VDU) and a computer (CO), **characterized** in

   - that the method comprises a selection method, a supervision method and an execution method,

   - that the selection method comprises selecting the relevant HV-apparatus via a selection relay (SR) for each HV-apparatus and preparing it for operation,

   - that all the other HV-apparatuses which can be operated from the computer are blocked via a blocking relay (BR),

   - that information that a selection has been made, A, or that no selection has been made, $\overline{A}$, and that information that blocking has been made, B, or that blocking has not been made, $\overline{B}$, is fed back to the supervision method where it is checked whether an order for selection, SE, has been requested or whether an order for election has not been requested, $\overline{SE}$, and whether the relevant HV-appara-tus is prepared for operation and

   - that, when the supervision method gives the green light for operation via execution relays (ER), the execution method is activated, whereby the relevant HV-apparatus is operated.

2. Method according to claim 1, **characterized** in that the information A, $\overline{A}$, B, $\overline{B}$, fed back to the supervision method, together with information about selection SE, $\overline{SE}$ is used to see whether an input fault I = (A·B) + (A-B) has occurred, to see whether an output fault O = ($\overline{SE}$·$\overline{A}$·B) + (SE·A·$\overline{B}$). has occurred in the computer by unauthorized or non-activation of selection relays (SE), blocking relay (BR), or execution relays (ER), and to confirm correct operation of relays and computer if C =(SE·$\overline{A}$·B) + ($\overline{SE}$·A·$\overline{B}$) .

3. Device for preventing unauthorized operation of high-voltage apparatuses (HV-apparatuses) (B1, D1, D2) including means of a keyboard (KB), a visual display unit (VDU) and a computer (CO) for carrying out the method according to claim 1 or 2, characterized in

   - that it comprises a relay unit (RU) and a supervision unit (SU),

   - that the relay unit comprises a selection unit (SR) for each HV-apparatus, a blocking relay (BR) for blocking selections of other HV-apparatuses and execution relays (ER) for ON- and OFF-operation of the HV-apparatus,

   - that the relay unit is adapted to deliver feedback signals A, $\overline{A}$, B, $\overline{B}$ to the supervision unit (SU) about the status of the relays included, and

   - that the supervision unit (SU) comprises logic elements in the form of "AND"-elements (1, 2, 4, 5, 7, 8), and "OR"-elements (3, 6, 9), connected to supply

      - information I if a fault occurs in the relay unit if I = (A·B) + ($\overline{A}$·$\overline{B}$),

      - together with information that a selection

SE, $\overline{SE}$ of HV-apparatus has been made,

- information O that the computer gives an incorrect order to the relay unit when $O = (\overline{SE} \cdot \overline{A} \cdot B) + (SE \cdot A \cdot \overline{B})$, and

- information C if the computer, the relay unit and the supervision unit are faultless when $C = (SE \cdot \overline{A} \cdot B) + (\overline{SE} \cdot A \cdot \overline{B})$.

4. . Device according to claim 3, **characterized** in

- that the feedback signal A = 1 if none of the selection relays (SR) or the execution relays (ER) is activated,

- that the feedback signal A = O if any of the selection relays (SR) or the execution relays (ER) is activated,

- that the feedback signal B = 1 if any of the selection relays (SR) or the execution relays (ER) is activated and at the same time the blocking relay (BR) is activated, and

- that the feedback signal B = O if none of the selection relays (SR), the execution relays (ER) or the blocking relay (BR) is activated or if any of the selection relays (SR) or the execution relays (ER) is activated but not the blocking relay (BR).

**Patentansprüche**

1. Verfahren zur Verhinderung ungewollter Betätigungen von Hochspannungsgeräten (HV-Geräten) (B1, D1, D2), die mittels einer Tastatur (KB), einer visuellen Anzeigeeinheit (VDU) und eines Computer (CO) betätigt werden, **dadurch gekennzeichnet,**

- daß zu dem Verfahren eine Auswählmethode, eine Überwachungsmethode und eine Ausführungsmethode gehören,

- daß zu der Auswählmethode die Auswahl des betreffenden HV-Gerätes über ein Auswählrelais (SR) für jedes HV-Gerät und die Vorbereitung des HV-Gerätes für die Betätigung gehören,

- daß alle anderen HV-Geräte, die durch den Computer betätigt werden können, über ein Blockierungsrelais (BR) blockiert werden,

- daß eine Information darüber, daß eine Auswahl getroffen wurde, A, oder daß keine Aus-

wahl getroffen wurde, $\overline{A}$, und daß eine Information, daß eine Blockierung erfolgt ist, B, oder daß keine Blockierung erfolgt ist, $\overline{B}$, zur Überwachungsmethode zurückgeführt wird, wo geprüft wird, ob ein Befehl zur Auswahl, $\overline{SE}$, verlangt wurde, oder ob kein Befehl zur Auswahl, SE, verlangt wurde und ob das betreffende HV-Gerät für die Betätigung vorbereitet ist und

- daß dann, wenn die Überwachungsmethode grünes Licht für die Betätigung über das Ausführungsrelais (ER) gibt, die Ausführungsmethode aktiviert wird, wodurch das betreffende HV-Gerät betätigt wird.

2. Verfahren nach Anspruch 1, **dadurch gekennzeichnet,** daß die an die Überwachungsmethode zurückgeführten Informationen A, $\overline{A}$, B, $\overline{B}$, zusammen mit Informationen über die Auswahl SE, $\overline{SE}$, verwendet werden zur Feststellung, ob ein Eingabefehler $I = (A \cdot B) + (\overline{A} \cdot \overline{B})$ stattgefunden hat, zur Feststellung, ob ein Ausgabefehler $O = (\overline{SE} \cdot \overline{A} \cdot B) + (SE \cdot A \cdot \overline{B})$ im Computer durch nicht autorisierte oder Nichtaktivierung von Auswählrelais (SE), Blockierungsrelais (BR) oder Ausführungsrelais (ER) stattgefunden hat, und zur Bestätigung einer korrekten Arbeitsweise der Relais und des Computers, wenn $C = (SE \cdot \overline{A} \cdot B) + (\overline{SE} \cdot A \cdot \overline{B})$.

3. Anordnung zur Verhinderung ungewollter Betätigungen von Hochspannungsgeräten (HV-Geräten) (B1, D1, D2), zu der eine Tastatur (KB), eine visuelles Anzeigeeinheit (VDU) und ein Computer (CO) gehören, zur Durchführung des Verfahrens nach Anspruch 1 oder 2, **dadurch gekennzeichnet,**

- daß zu ihr eine Relaiseinheit (RU) und eine Überwachungseiheit (SU) gehören,

- daß zu der Relaiseinheit eine Auswähleinheit (SR) für jedes HV-Gerät, ein Blockierungsrelais (BR) zur Blockierung der Auswahl anderer HV-Geräte, und ein Ausführungsrelais (ER) für Einschalt- und Ausschaltbetätigung des HV-Gerätes gehören,

- daß die Relaiseinheit imstande ist, Rückführungssignale A, $\overline{A}$, B, $\overline{B}$ über den Status der zugehörigen Relais an die Überwachungseiheit (SU) zu liefern, und

- daß zu der Überwachungseiheit (SU) logische Schaltungselemente in Gestalt eines UND-Gliedes (1, 2, 4, 5, 7, 8) und eines Oder-Glieds (3, 6, 9) gehören, die so geschaltet sind, daß sie liefern

- eine Information I, wenn ein Fehler in der Relaiseinheit auftritt, wenn $I = (A \cdot B) + (\bar{A} \cdot \bar{B})$,

- zusammen mit der Information, daß eine Auswahl SE, $\overline{SE}$ eines HV-Gerätes getroffen wurde

  - eine Information 0 daß der Computer einen unkorrekten Befehl an die Relaiseinheit gibt, wenn $0 = (\overline{SE} \cdot \bar{A} \cdot B) + (SE \cdot A \cdot \bar{B})$ und
  - eine Information C, wenn der Computer, die Relaiseinheit und die_Überwachungseiheit fehlerfrei sind, wenn $C = (SE \cdot \bar{A} \cdot B + (\overline{SE} \cdot A \cdot \bar{B})$.

4. Anordnung nach Anspruch 3, **dadurch gekennzeichnet,**

- daß das Rückführungssignal $A = 1$, wenn keines der ausgewählten Relais (SR) oder der Ausführungsrelais (ER) aktiviert ist,

- daß das Rückführungssignal $A = 0$, wenn eines der Auswählrelais (SR) oder der Ausführungsrelais (ER) aktiviert ist,

- daß das Rückführungssignal $B = 1$, wenn eines der Auswählrelais (SR) oder der Ausführungsrelais (ER) aktiviert ist und gleichzeitig das Blockierungsrelais (BR) aktiviert ist, und

- daß das Rückführungssignal $B = 0$, wenn keines der Auswählrelais (SR), der Ausführungsrelais (ER) oder Blockierungsrelais (BR) aktiviert ist oder wenn eines der Auswählrelais (SR) oder der Ausführungsrelais (ER) aktiviert ist, jedoch nicht das Blockierungssignal (BR) aktiviert ist.

**Revendications**

1. Procédé pour empêcher un fonctionnement non autorisé de dispositifs à haute tension (dispositifs HV) (B1, D1, D2) qui sont mis en fonctionnement au moyen d'un clavier (KB), d'une unité (VDU) d'affichage visuel et d'un ordinateur (CO), caractérisé

- en ce que le procédé comporte un procédé de sélection, un procédé de supervision et un procédé d'exécution,
- en ce que le procédé de sélection comprend le fait de sélectionner le dispositif HV approprié par l'intermédiaire d'un relais (SR) de sélection pour chaque dispositif HV et le préparer pour son fonctionnement,
- en ce que tous les autres dispositifs HV qui peuvent être mis en fonctionnement à partir de l'ordinateur sont bloqués par l'intermédiaire d'un relais (BR) de blocage,

- en ce qu'une information selon laquelle une sélection a été réalisée, A, ou qu'aucune sélection n'a été réalisée, $\bar{A}$, et qu'une information selon laquelle le blocage a été réalisé, B, ou que le blocage n'a pas été réalisé, $\bar{B}$, est envoyée en retour au procédé de supervision où il est vérifié si un ordre pour la sélection, SE, a été requis ou si un ordre pour la sélection n'a pas été requis, $\overline{SE}$, et si le dispositif HV approprié est préparé pour le fonctionnement et
- en ce que lorsque le procédé de supervision donne le feu vert pour le fonctionnement par l'intermédiaire des relais (ER) d'exécution, le procédé d'exécution est activé, le dispositif HV approprié étant alors mis en fonctionnement.

2. Procédé suivant la revendication 1, caractérisé en ce que les informations A, $\bar{A}$, B, $\bar{B}$ envoyées en retour au procédé de supervision, réunies avec une information concernant la sélection SE, SE sont utilisées pour vérifier si un défaut I d'entrée $I = (A \text{-} B) + (\bar{A} \text{-} \bar{B})$ est apparu, pour vérifier si un défaut O de sortie $O = (\overline{SE} \text{-} \bar{A} \text{-} B) + (SE \text{-} A \text{-} \bar{B})$ est apparu dans l'ordinateur par une sélection non autorisée ou non activée de relais (SE) de sélection, de relais (BR) de blocage ou de relais (ER) d'exécution et pour confirmer le fonctionnement correct des relais et de l'ordinateur si $C = (SE \text{-} \bar{A} \text{-} B) + (\overline{SE} \text{-} A \text{-} \bar{B})$.

3. Dispositif pour empêcher un fonctionnement non autorisé de dispositifs à haute tension (dispositifs HV) (B1, D1, D2) comportant des moyens constitués d'un clavier (KB), d'une unité (VDU) d'affichage visuel et d'un ordinateur (CO) destiné à mettre en oeuvre le procédé suivant la revendication 1 ou 2, caractérisé

- en ce qu'il comporte une unité (RU) de relais et une unité (SU) de supervision,
- en ce que l'unité de relais comporte une unité (SR) de sélection destinée à chacun des dispositifs HV, un relais (BR) de blocage destiné à bloquer des sélections d'autres dispositifs HV et des relais (ER) d'exécution pour un fonctionnement en marche et arrêt des dispositifs HV,
- en ce que l'unité de relais est adaptée pour envoyer des signaux A, $\bar{A}$, B, $\bar{B}$ de rétroaction à l'unité (SU) de supervision concernant l'état des relais qui s'y trouvent, et
- en ce que l'unité (SU) de supervision comprend des éléments logiques sous la forme d'éléments "ET" (1, 2, 4, 5, 7, 8), et des éléments "OU" (3, 6, 9) connectés pour envoyer

  - une information I selon laquelle un défaut est apparu dans l'unité de relais si $I = (A \text{-} B) + (\bar{A} \text{-} \bar{B})$,
  - avec information selon laquelle une sélec-

tion SE, $\overline{SE}$ du dispositif HV a été réalisée,

- une information O selon laquelle l'ordinateur donne un ordre incorrect à l'unité de relais lorsque $O = (\overline{SE}\text{-}\overline{A}\text{-}B) + (SE\text{-}A\text{-}\overline{B})$, et
- une information C selon laquelle l'ordinateur, l'unité de relais et l'unité de supervision sont sans défaut si $C = (SE\text{-}\overline{A}\text{-}B) + (\overline{SE}\text{-}A\text{-}\overline{B})$.

4. Dispositif suivant la revendication 3, caractérisé en ce

- que le signal A de rétroaction = 1 si aucun des relais (SR) de sélection ou des relais (ER) d'exécution n'est activé,
- que le signal A de rétroaction = O si l'un quelconque des relais (SR) de sélection ou des relais (ER) d'exécution est activé,
- que le signal B de rétroaction = 1 si l'un quelconque des relais (SR) de sélection ou des relais (ER) d'exécution est activé et que simultanément le relais (BR) de blocage est activé, et
- que le signal B de rétroaction = O si aucun des relais (SR) de sélection, des relais (ER) d'exécution ou des relais (BR) de blocage n'est activé ou si l'un quelconque des relais (SR) de sélection ou des relais (ER) d'exécution est activé mais par le relais (BR) de blocage.

*Fig. 1*

Fig. 2

$I = A \cdot B + (\overline{A} \cdot \overline{B})$

$O = (\overline{SE} \cdot \overline{A} \cdot B) + (SE \cdot A \cdot \overline{B})$

$C = (SE \cdot \overline{A} \cdot B) + (\overline{SE} \cdot A \cdot \overline{B})$

*Fig. 3*